# EUROPÄISCHE PATENTSCHRIFT

(11) **EP 1 340 964 B1**
(45) Veröffentlichungstag und Bekanntmachung des Hinweises auf die Patenterteilung: **09.02.2005**
(21) Anmeldenummer: 02004721.3
(22) Anmeldetag: 01.03.2002
(51) Int. Cl.: G01F 1/66, G01N 29/24, B06B 1/00

(54) **Ultraschallwandleranordnung mit Ultraschallfilter**
Ultrasonic transducer system with ultrasonic filter
Système de transducteurs à ultrasons avec un filtre ultrasonore

(43) Veröffentlichungstag der Anmeldung: 03.09.2003
(73) Patentinhaber: SICK Engineering GmbH, 01458 Ottendorf-Okrilla (DE)
(72) Erfinder: Pfeifer, Günther, Prof.Dr., 01237 Dresden (DE)
(74) Vertreter: Ludewigt, Christoph

(56) Entgegenhaltungen:
- DE-A- 19 723 488
- US-A- 5 275 060
- US-A- 5 515 733

## Beschreibung

Die Erfindung betrifft eine Ultraschallwandleranordnung gemäß dem Oberbegriff des Anspruchs 1.

Aus der US 5,275,060 ist eine derartige Ultraschallwandleranordnung bekannt. Ultraschallwandler werden beispielsweise in Gaszählern eingesetzt. Jeweils paarweise angeordnete Ultraschallwandler definieren einen Messpfad, der in einem nicht senkrechten Winkel zur Längsachse liegt. Das Messprinzip besteht in einer Bestimmung einer Laufzeitdifferenz zweier Ultraschallsignale, die einmal eine Komponente in Strömungsrichtung und einmal eine Komponente entgegen der Strömungsrichtung aufweisen. Aus der gemessenen Laufzeitdifferenz lässt sich die Strömungsgeschwindigkeit berechnen.

In der bekannten Ultraschallwandleranordnung ist ein die Ultraschallwellen erzeugender Piezokristall mit seiner Halterung über ein akustisches Körperschallfilter an der Messapparatur gehalten. Das Körperschallfilter dient dazu, eine Übersprechen der Ultraschallsignale über die Apparatur von einem Sender zu einem Empfänger zu unterdrücken. Das zylinderförmige Körperschallfilter weist dazu eine Vielzahl abwechselnd angeordneter Abschnitte mit dicker und dünner Wandstärke auf, so dass Abschnitte mit hoher und niedriger Impedanz bezüglich axial-translatorischer Bewegungen gebildet sind, die in ihrer Anordnung ein Übersprechen der Ultraschallsignale über das Gehäuse zumindest reduzieren.

Da Ultraschallsignale, die über das Gehäuse übertragen werden, erheblich kürzere Laufzeiten haben, als die Signale, die sich durch das zu messende Medium ausbreiten, wirken sich die übersprechenden Signale stark störend aus.

Dieses bekannte Körperschallfilter ist jedoch besonders zur Dämpfung axial wirkender Kräfte wirksam. Bei Ultraschallwandlern, die zur Körperschallentkopplung an Kreisplatten befestigt sind, werden vorrangig Drehmomente in das Körperschallfilter eingespeist, die u.a. zu radialen Dehnwellen und Radialschwingungen der nachfolgenden Bauelemente und damit zu einem Übersprechen der Ultraschallsignale führen. Derartige Schwingungen können aber von dem aus der US 5,275,060 bekannten Körperschallfilter nur ungenügend gedämpft werden.

Ausgehend von diesem Stand der Technik ist es Aufgabe der Erfindung, eine verbesserte Ultraschallwandleranordnung bereitzustellen, bei der über das Gehäuse übersprechende Ultraschallsignale, insbesondere durch Unterdrücken von Radial-Dehnwellen, verbessert unterdrückbar sind.

Diese Aufgabe wird gelöst durch eine Anordnung mit den Merkmalen des Anspruchs 1.

Erfindungsgemäß ist das Filter der Ultraschallwandleranordnung mit einer die Ultraschallwellen abstrahlenden Biegeplatte des Ultraschallwandlers verbunden. Das Filter weist einen Umlenkabschnitt auf, der eine radiale Auslenkung eines ersten Teilstücks des Filters in eine Torsionsauslenkung eines zweiten Teilstücks umsetzt. Die erfindungsgemäße Ausgestaltung hat den besonderen Vorteil, dass durch die Kombination einer radialen Dehnschwingung des ersten Teilstücks und einer Torsionsschwingung des zweiten Teilstücks über den Umlenkabschnitt eine optimale Filterung der Ultraschallsignale erreicht werden kann, so dass ein Übersprechen der Signale vom Ultraschallwandler in das Gehäuse der Messanordnung effektiv verhindert oder zumindest stark reduziert ist.

Der Umlenkabschnitt wandelt dabei eine radiale Auslenkung des ersten Teilstücks, die über die Biegeplatte als radial angreifendes Drehmoment in das erste Teilstück eingespeist wurde und Radialdehnwellen erzeugt, in eine Torsionsauslenkung des zweiten Teilstücks um. Durch geeignete Dimensionierung des Teilsystems bestehend aus Umlenkabschnitt und zweitem Teilstück kann erreicht werden, dass in einem ausreichend breiten und um die Betriebsfrequenz gelegenen Frequenzbereich, also dem spektralen Arbeitsbereich des Ultraschallwandlers, ein nahezu bewegungsfreier Zustand des zweiten Teilstücks vorliegt, dieser also kaum Torsionsschwingungen ausführt. Somit kann eine optimale Filterwirkung erreicht werden.

Bevorzugt ist das Filter mit einem Rand der biegeweichen Biegeplatte verbunden und die Biegeplatte wird durch das Ultraschall erzeugende Element mittig ausgelenkt. Auf diese Weise werden nur geringe axiale Kräfte in das Filter eingeleitet. Die Verbindung zwischen der Biegeplatte und dem ersten Teilstück besteht bevorzugt darin, die Biegeplatte randseitig direkt mit dem ersten Teilstück durch Löten oder Schweißen zu verbinden.

Bevorzugt ist die Ultraschallwandleranordnung in konstruktiv einfacher Weise rotationssymmetrisch ausgebildet.

Ebenfalls in konstruktiv einfacher Weise besteht der Umlenkabschnitt vorteilhafterweise in einer einfachen Verbindung zwischen dem Längsende des ersten Teilstücks und einer Innenseite des zweiten Teilstücks, so dass radiale Auslenkungen des Längsendes des ersten Teilstücks in Torsionsauslenkungen des zweiten Teilstücks umgesetzt werden.

Der Umlenkabschnitt kann als einfache Scheibe, die vorzugsweise eine 90° Umlenkung aufweist, ausgebildet sein.

In einer einfach herzustellenden Ausbildung der Erfindung ist das erste Teilstück als Mantelrohr ausgebildet, wobei vorteilhafterweise die Wandstärke des Mantelrohres sich in Längsrichtung ändert, vorzugsweise in Richtung auf das zweite Teilstück zunimmt. Dadurch werden Dickenresonanzen des Mantelrohrs, die eine Störquelle sein könnten und die Bandbreite des Filters reduzieren könnten, unterdrückt.

Das zweite Teilstück ist vorteilhafterweise als Torsionsring ausgebildet.

Damit die Biegeplatte die Ultraschallwellen mittig abstrahlen kann und möglichst geringe axiale Kräfte auf das Filter übertragen werden, weist die Biegeplatte zum Rand hin einen Massenring auf.

Zur Befestigung der Ultraschallwandleranordnung an einem Gehäuse einer Messanordnung ist das Filter und damit der Ultraschallwandler auf einem Befestigungsflansch gehalten.

Besonders vorteilhaft ist es, wenn das Filter mit seinen beiden Teilstücken und dem Umlenkabschnitt einstückig ausgebildet ist.

Das Filter und die einzelnen Teilstücke des Filters sollten derart dimensioniert sein, dass keine Resonanzen innerhalb der Nutzbandbreite des Ultraschallwandlers liegen. Die erste Torsionsresonanz des Torsionsringes und seine Radialresonanz liegen beispielsweise unterhalb des Arbeitsbereichs.

Die beste Filterwirkung lässt sich dabei erzielen, wenn die Bauteile derart dimensioniert sind, dass das zweite Teilstück im Nutzfrequenzband möglichst keine Schwingungsbewegung aufgrund seiner Rotationsmasse ausführt, so dass möglichst keine Schwingung auf das Gehäuse der Messanordnung übertragen wird.

Die Länge des ersten Teilstücks ist derart gewählt, dass axiale Resonanzen nicht in dem Nutzbandbereich liegen.

Im Folgenden wird die Erfindung anhand eines Ausführungsbeispiels unter Bezugnahme auf die Zeichnung im Einzelnen erläutert. In der Zeichnung zeigen:
- Fig. 1: eine Messanordnung unter Einsatz einer erfindungsgemäßen Ultraschallwandleranordnung;
- Fig. 2: eine Ausführungsform der erfindungsgemäßen Ultraschallwandleranordnung;
- Fig. 3: die Anordnung aus Fig. 2 in einem Schwingungszustand, der stark übertrieben und schematisch dargestellt ist;
- Fig. 4: Darstellung einer Schwingungsbewegung im ersten Teilstück;
- Fig. 5: Darstellung einer Schwingungsbewegung des zweiten Teilstücks.
- Fig. 6: eine weitere Ausführungsform der erfindungsgemäßen Ultraschallwandleranordnung.

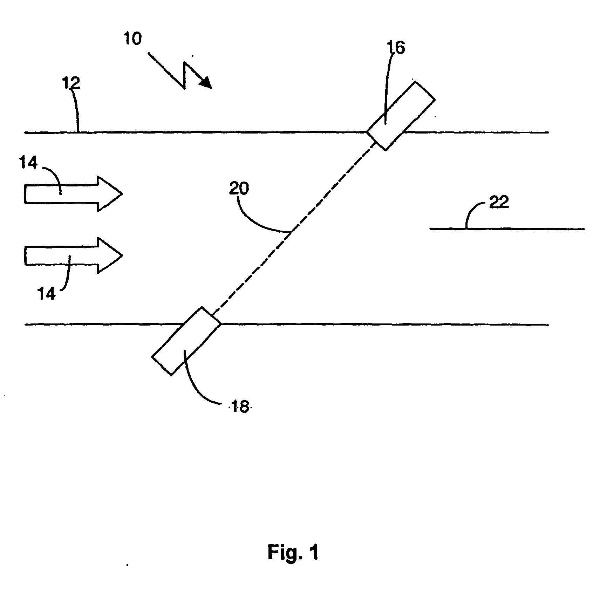

In Fig. 1 ist eine Messanordnung dargestellt, die das Messprinzip, beispielsweise eines Ultraschall-Gaszählers verdeutlicht. In einer Rohrleitung 12 strömt ein Gas in Strömungsrichtung 14. In der Rohrleitung 12 sind Ultraschallwandleranordnungen 16 und 18 angeordnet, die einen Messpfad 20 definieren. Die Ultraschallwandleranordnungen 16, 18 umfassen Ultraschallwandler, die geeignet sind elektrische Signale in Ultraschall umzuwandeln und umgekehrt, zum Senden und Empfangen von Ultraschall. Der Messpfad 20 ist in einem Winkel ungleich 90° zu einer Längsachse 22 der Rohrleitung 12 angeordnet, so dass die in entgegengesetzter Richtung entlang des Messpfades 20 gesandten Ultraschallsignale aufgrund der Gasströmung 14 eine Laufzeitdifferenz aufweisen. Aus der Laufzeitdifferenz lässt sich die Strömungsgeschwindigkeit und damit der Volumendurchfluss des Gases bestimmen.

Die Ultraschallsignale breiten sich jedoch nicht nur entlang des Messpfades 20 aus, sondern werden auch durch das Gehäuse der Messanordnung 10, also über die Ultraschallwandleranordnung 16 und 18 und die massive Rohrleitung 12, übertragen. Die Körperschallsignale, die über das Gehäuse übertragen werden, haben eine sehr viel höhere Übertragungsgeschwindigkeit und wirken sich daher störend auf die eigentliche Messung, mit der die entlang des Messpfades 20 die Gasströmung durchlaufenden Ultraschallsignale gemessen werden, aus.

Zur effektiven Reduktion der Körperschallübertragung ist die erfindungsgemäße Ausbildung der Ultraschallwandleranordnung 16 und 18 vorgesehen.

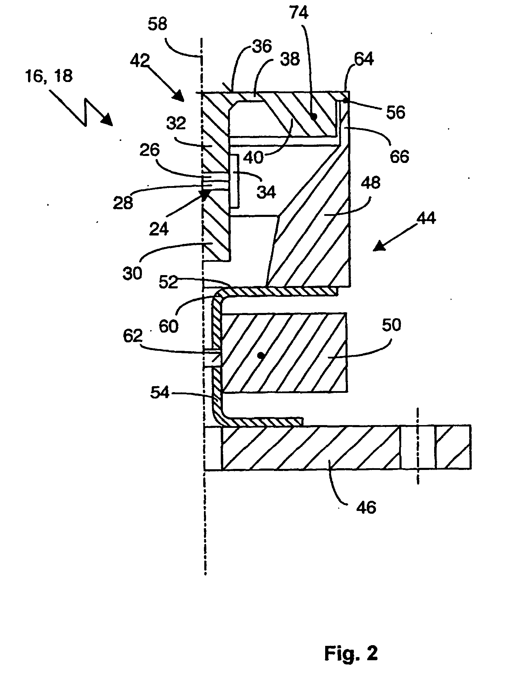

Die in Fig. 2 im Querschnitt dargestellte Ultraschallwandleranordnung 16, 18 weist einen Ultraschallwandler 42 und ein den Ultraschallwandler 42 haltendes Filter 44, das als Körperschallfilter ausgebildet ist und auf einem Befestigungsflansch 46 befestigt ist, auf.

Der Ultraschallwandler 42 weist ein Ultraschall erzeugendes Element 24 auf, das aus zwei Piezokeramiken 26, 28 bestehen kann, die mit nicht dargestellten elektrischen Leitungen verbunden sind. Das piezoelektrische Element 24 ist zwischen zwei zylindrischen Spannabschnitten 30 und 32 eingespannt, von denen der eine 30 aus einem schweren Metall wie z.B. Stahl und der andere 32 aus einem leichten Metall, insbesondere Titan, Aluminium oder Magnesium hergestellt ist. Die beiden Spannabschnitte 30 und 32 sind über ein Spannorgan 34 miteinander verbunden, so dass das piezoelektrische Element 24 zwischen den Spannabschnitten zusammengedrückt werden kann. Die freie Stirnseite 36 des Spannabschnitts 32 dient als Sende- und/oder Empfangsfläche, über welche die Ultraschallsignale abgestrahlt bzw. empfangen werden. Zur Vergrößerung der Stirnfläche 36 und zur Entkopplung von axialen Schwingungskräften ist die Stirnseite als Biegeplatte 38 ausgebildet. Im Bereich ihres Randes 64 weist die Biegeplatte 38 einen Massering 40 auf. Das piezoelektrische Element 24 bildet zusammen mit den Spannabschnitten 30 und 32 und der dazugehörigen Biegeplatte 38 mit Massering 40 sowie dem Spannorgan 34 den Ultraschallwandler 42.

Das Filter 44 umfasst ein erstes Teilstück 48, ein zweites Teilstück 50, die über einen Umlenkabschnitt 52 verbunden sind und einen Befestigungsfuß 54.

Das erste Teilstück 48 des Filters 44 ist als Mantelrohr ausgebildet. Es hält den Wandler 42 und wird im folgenden vereinfacht als Mantelrohr 48 bezeichnet. Das Mantelrohr 48 ist an seinem gemäß Fig. 2 oberen Ende mit dem Rand 64 der Biegeplatte 38 des Ultraschallwandlers 42 verbunden, insbesondere entlang einer Naht 56 verlötet oder verschweißt. Die Wandstärke des Mantelrohres 48 ändert sich in Richtung der Längsachse 58. In dem dargestellten Ausführungsbeispiel nimmt die Wandstärke in Richtung auf das zweite Teilstück 50 zu.

An seinem dem zweiten Teilstück 50 zugewandten Ende des ersten Teilstücks 48 schließt sich der Umlenkabschnitt 52 an, der bevorzugt als Scheibe ausgebildet ist, die bei der Bezugsziffer 60 eine 90° Umlenkung aufweist.

Das zweite Teilstück 50 ist als massiver kurzer Ring ausgebildet und wird im folgenden vereinfacht als Torsionsring 50 bezeichnet. An einer Ringinnenseite 62 ist der Umlenkabschnitt 52 befestigt. An den Torsionsring 50 schließt sich der Befestigungsfuß 54 an, der wiederum an der Innenseite 62 festgelegt ist.

Zwar ist das Filter 44 in den Darstellungen der einzelnen Figuren als aus mehreren Teilen bestehend dargestellt, jedoch ist eine einstückige Ausführung des Filters 44 mit seinem Mantelrohr 48, Umlenkabschnitt 52, Torsionsring 50 und Befestigungsfuß 54 bevorzugt einstückig ausgebildet.

Im Weiteren sollen die Schwingungszustände der erfindungsgemäßen Ultraschallwandleranordnung 16, 18 und insbesondere des Filters 44 erläutert werden, um die Wirkungsweise des Filters 44 beschreiben zu können:

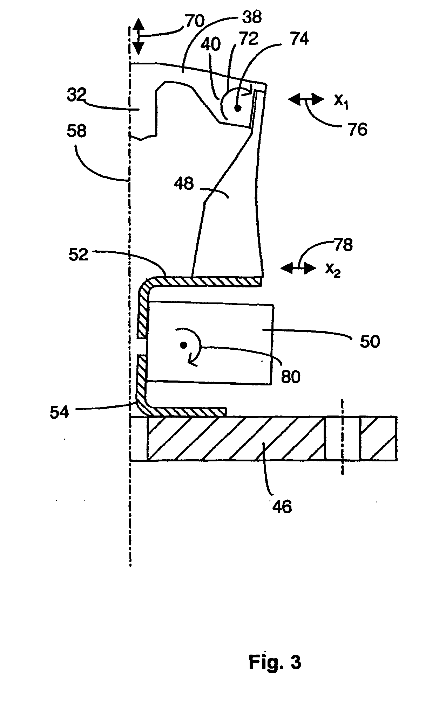

In den Fig. 3, 4 und 5 sind Schwingungsmöglichkeiten der Ultraschallwandlerordnung bzw. der einzelnen Komponenten zur Verdeutlichung stark übertrieben schematisch dargestellt. Von dem piezoelektrischen Element 24 werden Schwingungen erzeugt, die über den Spannabschnitt 32 der mit der kreisförmigen Biegeplatte 38 mittig verbunden ist, übertragen, so dass die Biegeplatte 38 Auslenkungen entsprechend des Doppelpfeiles 70 erfährt. Durch die schwingende Biegeplatte 38 werden die Ultraschallwellen entlang der Längsrichtung 58 erzeugt bzw. Ultraschallwellen werden entlang der Längsrichtung 58 empfangen, indem die Biegeplatte 38 zu Schwingungen 70 angeregt wird und diese Schwingungen durch das piezoelektrische Element 24 in elektrische Signale umgewandelt wird.

Der schwingende Spannabschnitt 32 speist über die Biegeplatte 38 in den Massering 40 ein radialsymmetrisches Drehmoment ein, welches im Massering 40 eine Torsionsbewegung (Pfeil 72) erzeugt. Dabei verdreht sich der Massering 40 um das kreisförmig umlaufende Torsionszentrum 74. Zusätzlich behindert er wegen seiner translatorischen Masse auch axiale Bewegungen und wegen seiner radialen Steife auch radiale Bewegungen der Biegeplatte 38 in diesem Segment. Die Rotationssteifigkeit und die radiale Steifigkeit des Masseringes 40 können aus fertigungstechnischen Gründen nicht ausreichend hoch gewählt werden. Deshalb treten Torsionsbewegungen 72 und radiale Bewegungen gegen den federnden Charakter des Masseringes 40 auf.

Durch die Lötverbindung 68 wird durch die Torsion des Masseringes 40 ein Drehmoment in das obere Endes des Mantelrohres 48 zwingend eingespeist. Bei freiem Mantelrohr 48 würde eine radiale Dehnwelle axial durch das Mantelrohr 48 laufen und zur Körperschalleinspeisung in den Befestigungsflansch 46 und damit in das Gehäuse der Messvorrichtung führen. Das Mantelrohr 48 bildet somit einen kurzen Radialdehnwellenleiter. Eine Vermeidung von Dehnwellen ist nicht möglich, da der Innendurchmesser nicht beliebig klein gemacht werden kann, da im Inneren des Mantelrohrs Teile des Ultraschallwandlers angeordnet sind.

Das Mantelrohr 48 kann auch nicht als weicher Radialbiegewellenleiter, mit dem auch Dehnwellen vermieden werden könnten und das Ziel, die Ausgangsdrehmomente klein zu halten, erreicht werden könnte, ausgeführt werden, da die Anordnung einem hohen Umgebungsdruck standhalten muss.

An das untere Ende des Mantelrohrs 48 schließt sich der Umlenkabschnitt 52 an, der eine radial und axial wirksame Federzone bildet. Am unteren Ende des Mantelrohrs 48 kommt es zu periodischen radialen Dehnungen X₂ (Doppelpfeil 78).

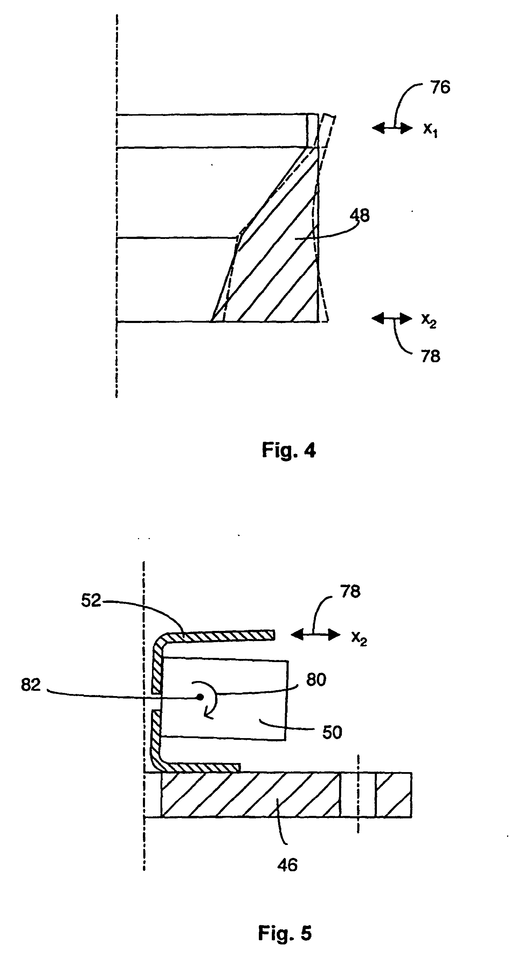

Durch den Umlenkabschnitt 52 wird die Radialdehnung x₂ am unteren Ende des Mantelrohrs 48 in ein Torsionsmoment für den Torsionsring 50 umgewandelt, wie dies insbesondere in Fig. 5 schematisch dargestellt ist. Der Torsionsring 50 führt dadurch Torsionsbewegungen in Pfeilrichtung 80 um ein ringförmig umlaufendes Torsionszentrum 82 aus.

Damit diese Torsionsbewegungen 80 möglich sind, ist der Befestigungsfuß 54 wie auch der Umlenkabschnitt 52 auf der Innenseite 62 des Torsionsrings 50 festgelegt.

Das Filter 44 hat die Aufgabe, im Arbeitsfrequenzbereich des Ultraschallwandlers 42 eine Körperschallübertragung bei diesen Frequenzen auszufiltern. Damit das Filter 44 optimal wirken kann, sollten die einzelnen Resonanzen der einzelnen Komponenten des Filters 44 außerhalb des Arbeitsfrequenzbereiches liegen. Bei diesen Resonanzen kann es sich um Dickenresonanzen, Radial- und Torsionsresonanzen beispielsweise des Masserings 40 sowie Längsresonanzen und dergleichen handeln. Durch geeignete Dimensionierung der Bauteile fassen sich dieses Resonanzen in unschädliche Frequenzbereiche legen.

Insbesondere das Schwingungssystem bestehend aus dem Umlenkabschnitt 52 und dem Torsionsring 50 sollte bezüglich Torsionsresonanzen und Radialresonanzen so abgestimmt werden, dass bei Frequenzen im Arbeitsbereich ein nahezu bewegungsfreier Zustand des Torsionsringes 50 erreicht wird. Dies wird durch genaue Wahl von Innen- und Aussendurchmesser und Höhe des Torsionsringes in Verbindung mit der Umlenknachgiebigkeit der Umlenkzone erreicht. Die erste Torsionsresonanz sollte unter dem Arbeitsfrequenzband des Wandlers liegen, damit die volle Drehmasse des Torsionsringes 50 die Bewegung behindert. Zusätzlich muss die erste Radialresonanz auch ausserhalb des Arbeitfrequenzbandes bleiben. Dann führt im Arbeitsfrequenzband der Torsionring 50 fast keine Schwingungsbewegungen mehr aus und das Filter 44 entfaltet seine beste Wirkung.

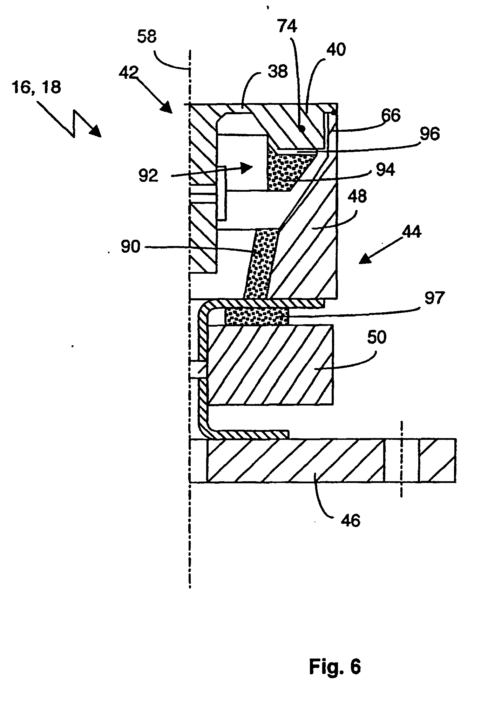

In dem Körperschallfilter 44 wird die Schwingungsenergie, die über die Drehmomente der Biegeplatte 38 in das Filter 44 eintreten im Mantelrohr 48 verbraucht. Zur Unterstützung dieses Vorganges kann in einer in Fig. 6 dargestellten Ausführungsform der Erfindung eine Dämpfungsschicht 90 bevorzugt im unteren Teil des Mantelrohres 48 innenseitig angebracht sein. Dadurch wird die Dehnwelle und die durch breitbandige Anregung unterhalb des Arbeitsfrequenzbereiches angeregte Radialresonanz des Mantelrohres 48 gedämpft. Das führt zu einer breitbandigeren Filterwirkung.

Zur weiteren Verbesserung der Filterwirkung kann auch der Massering 40 eine weitere Dämpfungsschicht 92 aufweisen, die aus einem aus Kunststoff oder Metall bestehenden Gegenkörper 94, der über eine energieaufnehmende Klebeschicht 96 an den Massering 40 geklebt ist, besteht.

Um ein langes Ausschwingen eines einmal angeregten Torsionsringes 50 zu verhindern, kann eine weitere Dämpfungsschicht 97 zwischen dem Umlenkabschnitt 52 und dem Torsionsring 50 eingebracht werden. Statt der - Dämpfungsschicht 97 kann auch ein Dämpfungsring angewendet werden.

Mit diesen zusätzlichen Maßnahmen wird erreicht, dass die Resonanzgüten aller in Verbindung mit dem Massering 40 und dem Mantelrohr 48 stehenden Partialresonanzen gedämpft werden.

## Patentansprüche

1. Ultraschallwandleranordnung mit einem Ultraschallwandler (42) und mit einem Filter (44), über den der Ultraschallwandler (42) gehalten ist, **dadurch gekennzeichnet, dass** das Filter (44) mit einer die Ultraschallwellen abstrahlenden Biegeplatte (38) des Ultraschallwandlers (42) verbunden ist und das Filter (44) einen Umlenkabschnitt (52) aufweist, der eine radiale Auslenkung (x₂) eines ersten Teilstücks (48) des Filters (44) in eine Torsionsauslenkung (80) eines zweiten Teilstücks (50) umsetzt.

2. Ultraschallwandleranordnung nach Anspruch 1, **dadurch gekennzeichnet, dass** die Biegeplatte (38) durch ein den Ultraschall erzeugendes Element (24) mittig auslenkbar ist und das Filter (44) mit einem Rand der Biegeplatte (38) verbunden ist.

3. Ultraschallwandleranordnung nach einem der vorhergehenden Ansprüche, **dadurch gekennzeichnet, dass** der Umlenkabschnitt (52) längsendseitig an dem ersten Teilstück (48) und an einer Innenseite (62) des zweiten Teilstücks (50) angebunden ist.

4. Ultraschallwandleranordnung nach einem der vorhergehenden Ansprüche, **dadurch gekennzeichnet, dass** der Umlenkabschnitt (52) als Scheibe ausgebildet ist.

5. Ultraschallwandleranordnung nach Anspruch 4, **dadurch gekennzeichnet, dass** der Umlenkabschnitt (52) eine 90° Umlenkung (60) aufweist.

6. Ultraschallwandleranordnung nach einem der vorhergehenden Ansprüche, **gekennzeichnet durch** eine rotationssymmetrische Ausbildung.

7. Ultraschallwandleranordnung nach einem der vorhergehenden Ansprüche, **dadurch gekennzeichnet, dass** das erste Teilstück (48) als Mantelrohr ausgebildet ist.

8. Ultraschallwandleranordnung nach einem der vorhergehenden Ansprüche, **dadurch gekennzeichnet, dass** das zweite Teilstück (50) als Torsionsring ausgebildet ist.

9. Ultraschallwandleranordnung nach einem der vorhergehenden Ansprüche, **dadurch gekennzeichnet, dass** die Biegeplatte (38) randseitig einen Massering (40) aufweist.

10. Ultraschallwandleranordnung nach einem der vorhergehenden Ansprüche, **dadurch gekennzeichnet, dass** das Filter (44) auf einem Befestigungsflansch (46) gehalten ist.

11. Ultraschallwandleranordnung nach einem der vorhergehenden Ansprüche, **dadurch gekennzeichnet, dass** das Filter (44) einstückig ausgebildet ist.

12. Ultraschallwandleranordnung nach einem der vorhergehenden Ansprüche, **dadurch gekennzeichnet, dass** sämtliche Resonanzen des Filters und der Teilstücke des Filters außerhalb einer Nutzbandbreite des Ultraschallwandlers liegen.

13. Ultraschallwandleranordnung nach einem der vorhergehenden Ansprüche, **dadurch gekennzeichnet, dass** die Bauteile des Filters derart dimensioniert sind, dass das zweite Teilstück im Nutzfrequenzband möglichst keine Schwingungsbewegung ausführt.

14. Ultraschallwandleranordnung nach einem der vorhergehenden Ansprüche, **dadurch gekennzeichnet, dass** das als Mantelrohr ausgebildete erste Teilstück (48) eine in Richtung auf das zweite Teilstück (50) zunehmende Wandstärke aufweist.

15. Ultraschallwandleranordnung nach einem der vorhergehenden Ansprüche, **dadurch gekennzeichnet, dass** die Länge des ersten Teilstücks derart gewählt ist, dass die axiale Resonanz nicht in dem Nutzbandbereich liegt.

16. Ultraschallwandleranordnung nach einem der vorhergehenden Ansprüche, **dadurch gekennzeichnet, dass** das erste Teilstück (48) eine Dämpfungsschicht (90) aufweist.

17. Ultraschallwandleranordnung nach einem der vorhergehenden Ansprüche, **dadurch gekennzeichnet, dass** der Massering (40) eine weitere Dämpfungsschicht (92) aufweist.

18. Ultraschallwandleranordnung nach einem der vorhergehenden Ansprüche, **dadurch gekennzeichnet, dass** zwischem dem Umlenkabschnitt (52) und/oder dem torsionsringseitigem Ende des ersten Teilstücks (48) und dem zweiten Teilstück (50) eine weitere Dämpfungsschicht (97) oder ein Dämpfungsring eingebracht ist.

19. Ultraschallwandleranordnung nach Anspruch 16 oder 17, **dadurch gekennzeichnet, dass** die Dämpfungsschicht (92) als mit einer Klebeschicht (96) befestigter Gegenkörper (94) ausgebildet ist.

## Claims

1. Ultrasonic transducer system comprising an ultrasound transducer (42) and a filter (44) supporting the ultrasound transducer (42) **characterized in that** the filter (44) is coupled to a vibration plate (38) emitting ultrasonic signals of the ultrasound transducer (42) and the filter (44) comprises a deflecting segment (52) which converts a radial movement (x₂) of a first section (48) of the filter (44) into a torsional movement (80) of a second section (50).

2. Ultrasonic transducer system according to claim 1, **characterized in that** a mid-portion of the vibration plate (38) is deflected when subjected to ultrasound generated by an ultrasound generating element (24), and the filter (44) is coupled to a rim of the vibration plate (38).

3. Ultrasonic transducer system according to one of the preceding claims, **characterized in that** the deflecting segment (52) is coupled to a longitudinal end of the first section (48) and to an inner side (62) of the second section (50).

4. Ultrasonic transducer system according to one of the preceding claims, **characterized in that** the deflecting segment (52) comprises a disc.

5. Ultrasonic transducer system according to claim 4, **characterized in that** the deflecting segment (52) includes a 90º bend (60).

6. Ultrasonic transducer system according to one of the preceding claims, **characterized in that** it is rotationally symmetric.

7. Ultrasonic transducer system according to one of the preceding claims, **characterized in that** the first section (48) comprises a tubular casing.

8. Ultrasonic transducer system according to one of the preceding claims, **characterized in that** the second section (50) comprises a torsion ring.

9. Ultrasonic transducer system according to one of the preceding claims, **characterized in that** the vibration plate (38) comprises a mass ring (40) at its periphery.

10. Ultrasonic transducer system according to one of the preceding claims, **characterized in that** the filter (44) is secured to a mounting flange (46).

11. Ultrasonic transducer system according to one of the preceding claims, **characterized in that** the filter (44) comprises a one-piece construction.

12. Ultrasonic transducer system according to one of the preceding claims, **characterized in that** all resonances of the filter and individual components thereof are outside an operational frequency band width of the ultrasound transducer.

13. Ultrasonic transducer system according to one of the preceding claims, **characterized in that** the components of the filter are dimensioned so that the second segment is substantially motionless over an operational frequency band width of the ultrasound transducer.

14. Ultrasonic transducer system according to one of the preceding claims, **characterized in that** the first section (48) comprising the tubular casing has a wall thickness which increases in a direction towards the second section (50).

15. Ultrasonic transducer system according to one of the preceding claims, **characterized in that** the first section has a length so that an axial resonance thereof is outside the operational frequency band width of the ultrasound transducer.

16. Ultrasonic transducer system according to one of the preceding claims, **characterized in that** the first section (48) includes a damping layer (90).

17. Ultrasonic transducer system according to one of the preceding claims, **characterized in that** the mass ring (40) includes a further damping layer (92).

18. Ultrasonic transducer system according to one of the preceding claims, **characterized in that** a further damping layer (97) or a damping ring is included between the deflecting segment (52) and/or the torsion-sided end of the first section (48) and the second section (50).

19. Ultrasonic transducer according to claim 16 or 17, **characterized in that** the damping layer (92) is formed as a counterpart (94) which is fixed with a layer (96) of a bonding agent.

## Revendications

1. Dispositif transducteur d'ultrasons comprenant un transducteur d'ultrasons (42) et un filtre (44), par lequel le transducteur d'ultrasons (42) est maintenu, **caractérisé en ce que** le filtre (44) est relié à une plaque de flexion (38), diffusant les ondes ultrasonores, du transducteur d'ultrasons (42) et le filtre (44) présente une partie de renvoi (52), qui convertit une déviation (x₂) radiale d'un premier tronçon (48) du filtre (44) en une déviation de torsion (80) d'un second tronçon (50).

2. Dispositif transducteur d'ultrasons selon la revendication 1, **caractérisé en ce que** la plaque de flexion (38) peut être déviée au centre par un élément (24) générant les ultrasons et le filtre (44) est relié à un bord de la plaque de flexion (38).

3. Dispositif transducteur d'ultrasons selon l'une quelconque des revendications précédentes, **caractérisé en ce que** la partie de renvoi (52) est rattachée côté extrémité longitudinale sur le premier tronçon (48) et sur un côté intérieur (62) du second tronçon (50).

4. Dispositif transducteur d'ultrasons selon l'une quelconque des revendications précédentes, **caractérisé en ce que** la partie de renvoi (52) est conçue comme un disque.

5. Dispositif transducteur d'ultrasons selon la revendication 4, **caractérisé en ce que** la partie de renvoi (52) présente un renvoi de 90° (60).

6. Dispositif transducteur d'ultrasons selon l'une quelconque des revendications précédentes, **caractérisé par** une réalisation symétrique en rotation.

7. Dispositif transducteur d'ultrasons selon l'une quelconque des revendications précédentes, **caractérisé en ce que** le premier tronçon (48) est conçu comme un tube d'enveloppe.

8. Dispositif transducteur d'ultrasons selon l'une quelconque des revendications précédentes, **caractérisé en ce que** le second tronçon (50) est conçu comme une bague de torsion.

9. Dispositif transducteur d'ultrasons selon l'une quelconque des revendications précédentes, **caractérisé en ce que** la plaque de flexion (38) présente côté bord une bague de masse (40).

10. Dispositif transducteur d'ultrasons selon l'une quelconque des revendications précédentes, **caractérisé en ce que** le filtre (44) est maintenu sur une bride de fixation (46).

11. Dispositif transducteur d'ultrasons selon l'une quelconque des revendications précédentes, **caractérisé en ce que** le filtre (44) est conçu d'une seule pièce.

12. Dispositif transducteur d'ultrasons selon l'une quelconque des revendications précédentes, **caractérisé en ce que** toutes les résonances du filtre et des tronçons du filtre sont disposées à l'extérieur d'une largeur de bande utile du transducteur d'ultrasons.

13. Dispositif transducteur d'ultrasons selon l'une quelconque des revendications précédentes, **caractérisé en ce que** les composants du filtre sont dimensionnés de telle sorte que le second tronçon n'exécute, dans la mesure du possible, pas de mouvement de vibration dans la bande de fréquence utile.

14. Dispositif transducteur d'ultrasons selon l'une quelconque des revendications précédentes, **caractérisé en ce que** le premier tronçon (48) conçu comme tube d'enveloppe présente une épaisseur de paroi qui augmente en direction du second tronçon (50).

15. Dispositif transducteur d'ultrasons selon l'une quelconque des revendications précédentes, **caractérisé en ce que** la longueur du premier tronçon est choisie de telle sorte que la résonance axiale ne se situe pas dans la plage de bande utile.

16. Dispositif transducteur d'ultrasons selon l'une quelconque des revendications précédentes, **caractérisé en ce que** le premier tronçon (48) présente une couche d'amortissement (90).

17. Dispositif transducteur d'ultrasons selon l'une quelconque des revendications précédentes, **caractérisé en ce que** la bague de masse (40) présente une autre couche d'amortissement (92).

18. Dispositif transducteur d'ultrasons selon l'une quelconque des revendications précédentes, **caractérisé en ce qu'**une couche d'amortissement (97) supplémentaire ou une bague d'amortissement est introduite entre la partie de renvoi (52) et/ou l'extrémité côté bague de torsion du premier tronçon (48) et le second tronçon (50).

19. Dispositif transducteur d'ultrasons selon la revendication 16 ou 17, **caractérisé en ce que** la couche d'amortissement (92) est conçue comme un contre-corps (94) fixé avec une couche collante (96).
